# EUROPEAN PATENT SPECIFICATION

(11) **EP 0 304 254 B1**
(45) Date of publication and mention of the grant of the patent: **14.04.1993**
(21) Application number: 88307535.0
(22) Date of filing: 12.08.1988
(51) Int. Cl.: H04N 11/22, H04N 9/83, H04N 9/79

(54) **Color video signal converting method**
Verfahren für die Umwandlung von Farbbildsignalen
Méthode de conversion de signaux vides de couleur

(30) Priority: 18.08.1987 JP 204619/87
(43) Date of publication of application: 22.02.1989
(73) Proprietor: VICTOR COMPANY OF JAPAN, LIMITED, Yokohama-Shi Kanagawa-Ken 221 (JP)
(72) Inventor: Kosaka, Yoshiteru, Zushi-Shi Kanagawa-ken (JP); Yamada, Kunio, Adachi-ku Tokyo (JP)
(74) Representative: Robinson, John Stuart

(56) References cited:
- EP-A- 0 076 047
- FR-A- 2 507 421
- PATENT ABSTRACTS OF JAPAN, vol. 7, no. 194 (E-195), 24th August 1983; & JP-A-58 094 291
- PATENT ABSTRACTS OF JAPAN, vol. 12, no. 474 (E-692), 12th December 1988; & JP-A-63 193 686

## Description

The present invention generally relates to color video signal converting methods, and more particularly to a color video signal converting method which converts a SECAM system color video signal into a PAL system color video signal and thereafter converts the PAL system color video signal back into the SECAM system color video signal.

As is well known, the existing color television systems are not unified throughout the world, and there basically are three color television systems depending on the transmission format of the color signal. The three color television systems are the NTSC system, the PAL system and the SECAM system, and a predetermined one of the color television systems is employed depending on the country or region. Out of the three color systems, the PAL system and the SECAM system have the same number of scanning lines and the same field frequency, and these two color television systems are employed in neighboring countries or regions.

On the other hand, a majority of the existing helical scan type video tape recorders (VTRs) which record and/or reproduce the color video signal use the so-called low-band conversion system. In other words, a luminance signal and a carrier chrominance signal are separated from a composite color video signal, and the separated luminance signal is frequency-modulated into a frequency modulated (FM) luminance signal while the separated carrier chrominance signal is frequency-converted into a frequency band lower than a frequency band occupied by the FM luminance signal. The FM luminance signal and a frequency converted carrier chrominance signal which is obtained by the frequency conversion are frequency-division-multiplexed into a frequency division multiplexed signal. The frequency division multiplexed signal is recorded on tracks formed obliquely to a longitudinal direction of a magnetic tape by rotary magnetic heads. At the time of the reproduction, the frequency division multiplexed signal is reproduced from the tracks by the rotary magnetic heads, and a reproduced color video signal in conformance with a predetermined color television system is obtained by subjecting the reproduced frequency division multiplexed signal to a signal processing complementary to the signal processing carried out at the time or recording.

In the VTR employing the low-band conversion system, two mutually adjacent tracks are formed on the magnetic tape by the rotary magnetic heads having gaps of mutually different azimuth angles. The two mutually adjacent tracks are formed without a guard band or with a narrow guard band. However, the frequency converted carrier chrominance signal reproduced from an adjacent track as crosstalk deteriorates the picture quality because the frequency converted carrier chrominance signal has a low frequency and the azimuth loss effect thereof is small. For this reason, it is necessary to take measures against the unwanted crosstalk.

For the VTRs which record and/or reproduce the NTSC system color video signal and the PAL system color video signal by use of the low-band conversion system, the measures against the unwanted crosstalk are disclosed in GB-A-1506087 in which the applicant is the same as the applicant of the present application. According to this British Patent, a chrominance subcarrier of the frequency converted carrier chrominance signal which is an amplitude modulated wave is subjected to a phase shift of 90 degrees in a predetermined direction for every one horizontal scanning period at the time of the recording. At the time of the reproduction, the chrominance subcarrier is subjected to a phase shift of 90 degrees in essentially an opposite direction to the predetermined direction for every one horizontal scanning period so as to obtain a reproduced carrier chrominance signal. The crosstalk is eliminated by passing the reproduced carrier chrominance signal through a comb filter.

However, the VTR which records and/or reproduces the SECAM system color video signal using the low-band conversion system is not compatible with the phase shift method described above because the carrier chrominance signal of the SECAM system color video signal is different from the carrier chrominance signals of the NTSC and PAL system color video signals. In other words, the carrier chrominance signal of the SECAM system color video signal is a frequency modulated wave which is obtained by frequency-modulating a carrier by a line-sequential color difference signal. Thus, the low-band conversion system requires some measure to overcome the problem. For this reason, a different method is used to eliminate the crosstalk in the VTR which records and/or reproduces the SECAM system color video signal using the low-band conversion system, such as the method disclosed in FR-A-2 402 367 in which the applicant is the same as the applicant of the present application. According to this method, the carrier chrominance signal is frequency-divided at the time of the recording and the reproduced frequency converted carrier chrominance signal is frequency-multiplied at the time of the reproduction so as to obtain the reproduced carrier chrominance signal having the original frequency band and frequency deviation.

As in the case of the VTRs designed for the NTSC and PAL system color video signals, the VTR designed for the SECAM system color video signal also has a standard play mode and an extended play mode. In the standard play mode, the video signal reproduction is carried out with a tape transport speed identical to that at the time of the recording. On the other hand, in the extended play mode, the video signal reproduction is carried out with a tape transport speed which is one-half the tape transport speed at the time of the recording, for example, so as to provide a longer play time with a given length of magnetic tape. But in the extended play mode of the VTR designed for the SECAM system color video signal, the color deterioration at the fringe of image is conspicuous compared to that of the VTRs designed for the NTSC and PAL system color video signals and using the phase shift method. Hence, in view of an improvement of the quality of the reproduced picture, it is desirable to convert the SECAM system color video signal into the PAL system color video signal and record and/or reproduce the PAL system color video signal using the phase shift method provided that previously mentioned problem is overcome by some means. In this case, there is an additional advantage in that the VTR having a converting circuitry for converting the SECAM system color video signal into the PAL system color video signal and vice versa can play a magnetic tape recorded with the PAL system color video signal and obtain a SECAM system color video signal.

Accordingly, in the VTR which records and/or reproduces the SECAM system color video signal in the form of the PAL system color video signal, a first converter is required in the recording system for converting the SECAM system color video signal into the PAL system color video signal (especially the carrier chrominance signal) and a second converter is required in the reproducing system for converting the PAL system color video signal back into the SECAM system color video signal (especially the carrier chrominance signal).

A first conventional converter for converting the SECAM system carrier chrominance signal into the PAL system carrier chrominance signal supplies the carrier chrominance signal of the input SECAM system color video signal to a delay circuit having a delay time of one horizontal scanning period (hereinafter simply referred to as 1H). The delay circuit having the delay time of 1H will hereinafter be referred to as a 1H delay circuit. A first switching circuit alternately outputs the input and output signals of the 1H delay circuit at every 1H interval while a second switching circuit alternately outputs the output and input signals of the 1H delay circuit at every 1H interval. Output signals of the first and second switching circuits are supplied to respective frequency demodulators and the two kinds of color difference signals (R-Y) and (B-Y) are outputted in parallel from the frequency demodulators. The two kinds of color difference signals (R-Y) and (B-Y) respectively modulate the PAL system chrominance subcarrier frequency signals of 4.43 (actually 4.433619) MHz in conformance with the carrier suppression quadrature (two-phase) amplitude modulation, and the phase of the chrominance subcarrier of the color difference signal (R-Y) is inverted for every 1H. The two kinds of color difference signals thus obtained are multiplexed into a carrier chrominance signal in conformance with the PAL system.

A second conventional converter for converting the PAL system carrier chrominance signal into the SECAM system carrier chrominance signal supplies the carrier chrominance signal of the input PAL system color video signal to a 1H delay circuit. An adding circuit adds the input and output signals of the 1H delay circuit so as to obtain a first carrier chrominance signal having the color difference signal (B-Y) as a modulating signal while a subtracting circuit subtracts the output signal of the 1H delay circuit from the input signal of the 1H delay circuit so as to obtain a second carrier chrominance signal having the color difference signal (R-Y) as a modulating signal. The first carrier chrominance signal is used to generate a first FM wave by frequency-modulating a carrier of 4.25 MHz by the color difference signal (B-Y) which is obtained by amplitude demodulation, and the second carrier chrominance signal is used to generate a second FM wave by frequency-modulating a carrier of 4.41 (actually 4.40625) MHz by the color difference signal (R-Y) which is obtained by amplitude demodulation after phase inversion which occurs every 1H. The first and second FM waves are alternately outputted by a switching circuit at every 1H interval thereby producing a carrier chrominance signal in conformance with the SECAM system.

In the second converter which converts the PAL system carrier chrominance signal into the SECAM system carrier chrominance signal, the two kinds of amplitude demodulated color difference signals (R-Y) and (B-Y) are frequency-modulated and converted into a line-sequential signal and supplied to a SECAM system television receiver as the SECAM system carrier chrominance signal. But the color sequence of the two kinds of color difference signals constituting the carrier chrominance signal within the SECAM system color video signal may or may not be the same between the input SECAM system color video signal of the first converter and the output SECAM system color video signal of the second converter with respect to the same line. When the conversion is carried out at random, each of the two cases where the color sequence coincide or do not coincide with respect to the same line occur with a probability of 50%.

However, there conventionally is no intent to transmit a color sequence information of the SECAM system carrier chrominance signal to the second converter when converting the SECAM system carrier chrominance signal into the PAL system carrier chrominance signal in the first converter. Furthermore, there conventionally is no intent to receive such a color sequence information at the second converter when converting the PAL system carrier chrominance signal back into the SECAM system carrier chrominance signal, so as to control the color sequence of the SECAM system carrier chrominance signal after the conversion based on the color sequence information. Accordingly, the color sequence of the SECAM system carrier chrominance signal before the conversion and the color sequence of the SECAM system carrier chrominance signal after the conversion conventionally cannot be related with each other and there is no intention to relate the two.

Therefore, according to the conventional converting method, the two kinds of color sequences occur with the probability of 50%. As a result, after the demodulation carried out in the television receiver, a smear or a line flicker between two adjacent lines caused by the conversion and generated in a vicinity of a position where the hue suddenly changes is different depending on the color sequence.

The inventors of the present application have thus proposed in JP-A-63 193 686 a system of converting the color video signal in which the polarity of the color difference signal (R-Y) within the PAL system carrier chrominance signal (that is, the phase of the color burst signal) is transmitted as the color sequence information. According to the proposed system, it is possible to fix the relationship between the color sequence of the SECAM system carrier chrominance signal before the conversion and the color sequence of the SECAM system carrier chrominance signal after the conversion to a predetermined relationship. Thus, the smear or line flicker between the lines caused by the conversion and generated in the vicinity of the position where the hue suddenly changes can be stabilized regardless of the color sequence without the need to use a special signal.

But there are two kinds of PAL demodulators of the second converter, one using the 1H delay circuit for demodulating the PAL system carrier chrominance signal into the two kinds of color difference signals, and the other which does not use the 1H delay circuit. According to the proposed system described before, there is a problem in that the smear or line flicker between the lines caused by the conversion and generated in the vicinity of the position where the hue suddenly changes occurs depending on the kind of the PAL demodulator used.

Accordingly, it is a general object of the present invention to provide a novel and useful color video signal converting apparatus in which the problems described heretofore are eliminated.

Another and more specific object of the present invention is to provide a color video signal converting apparatus which converts the television system of a color video signal so that a minimum smear is generated depending on the construction of a PAL demodulator.

According to a first aspect of the present invention there is provided a color video signal converting apparatus as defined in appended Claim 1.

According to a second aspect of the present invention there is provided a color video signal converting apparatus as defined in appended Claim 2.

Preferred embodiments of the invention are defined in the other appended claims.

It is thus possible to minimize a smear generated in the reproduced picture.

The present invention will be further described, by way of example, with reference to the accompanying drawings, in which:-
FIG.1A and 1B respectively show the relative relationship of the color information at each converting stage and the demodulated color information within a television receiver supplied with a final output SECAM system carrier chrominance signal for a case where the PAL demodulator has a 1H delay circuit and a case where the PAL demodulator has no 1H delay circuit;
FIG.2 is a system block diagram showing an embodiment of the first converter used in the apparatus of the present invention;
FIG.3 is a system block diagram showing an embodiment of the second converter used in the apparatus of the present invention; and
FIGS.4 and 5 are system block diagrams respectively showing embodiments of the PAL demodulator.

According to the present invention, the second converter for converting the PAL system carrier chrominance signal back into the SECAM system carrier chrominance signal operates differently between the case where a PAL demodulator thereof has a 1H delay circuit and the case where the PAL demodulator does not have the 1H delay circuit.

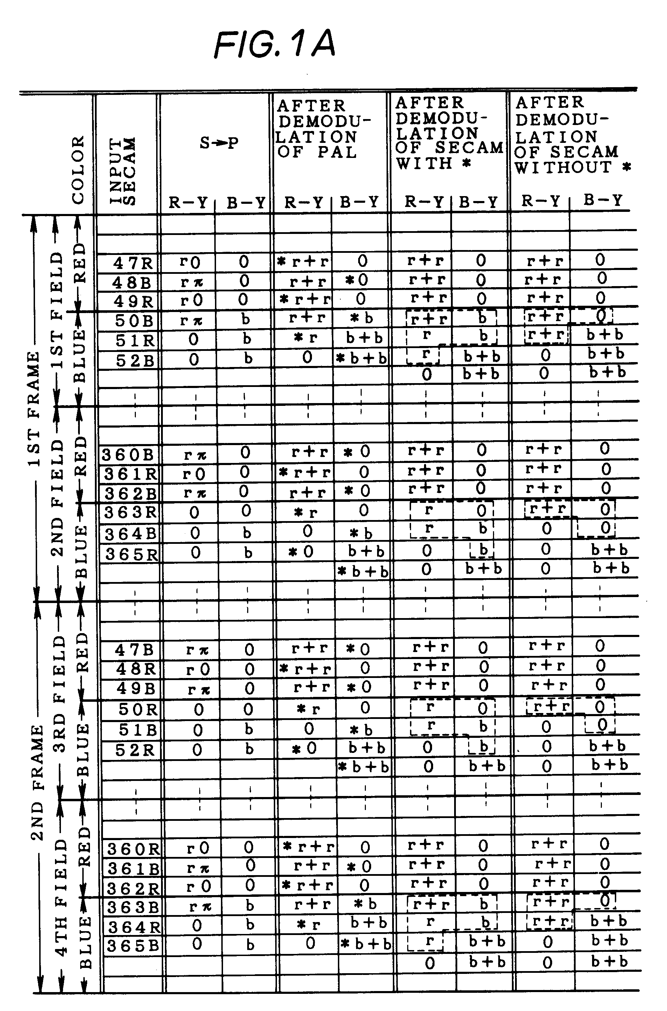

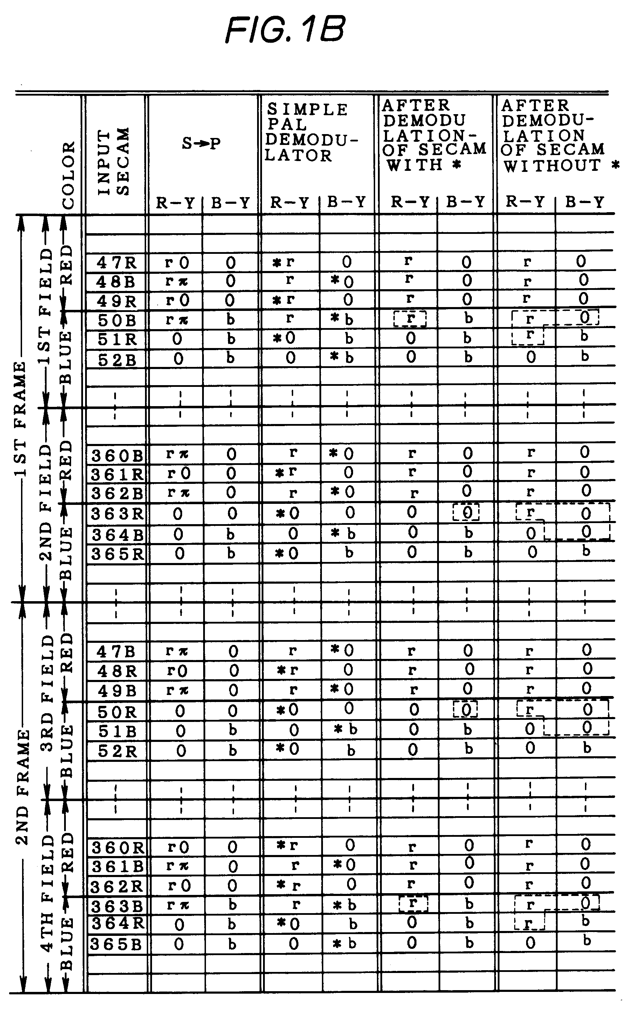

First, a description will be given of a case where the PAL demodulator within the second converter has the 1H delay circuit, by referring to FIG.1A. In FIG.1A and FIG.1B which will be described later, "input SECAM" denotes the input SECAM system color video signal to the first converter, "R" denotes the color difference signal (R-Y), "B" denotes the color difference signal (B-Y), "S P" denotes respective vectors of the color difference signals (R-Y) and (B-Y) within the output PAL system carrier chrominance signal of the first converter, "r" denotes the color difference signal (R-Y) for the case where the image is red, "b" denotes the color difference signal (B-Y) for the case where the image is blue, "0" denotes the case where the color difference signals (R-Y) or (B-Y) do not exist, and "0" and "π" immediately after "r" respectively denote cases where the phase of the carrier of the color difference signal (R-Y) is 0 and 180 degrees.

Further, "after PAL demodulation" denotes the color difference signals (R-Y) and (B-Y) demodulated by the PAL demodulator within the second converter. "r+r" and "b+b" simply indicate that the red or blue component is derived from two lines through the conversion process and do not describe the absolute value of the signals.

It is assumed for convenience sake that the original SECAM system color video signal in the first and third fields relates to a red image up to the fourty-ninth (49th) line and to a blue image on and after the fiftieth (50th) line, and the original SECAM system color video signal in the second and fourth fields relates to a red image up to the three hundred and sixty-second (362nd) line and to a blue image on and after the three hundred and sixty-third (363rd) line. The hue suddenly changes between the 49th and 50th lines and between the 362nd and 363rd lines.

In the second converter, the timings of the two kinds of color difference signals (R-Y) and (8-Y) obtained by the demodulation in the PAL demodulator are matched. Hence, the two kinds of color difference signals (R-Y) and (B-Y) need to be formed into a line-sequential signal in order to convert the two kinds of color difference signals into the SECAM system carrier chrominance signal, and one of the two kinds of color difference signals must be selected and transmitted at one time. There are two methods of selecting the color difference signal, that is, a first selecting method which selects the color difference signal added with the symbol "*" in FIGS.1A and 1B and a second selecting method which selects the color difference signal without the symbol "*" in FIGS.1A and 1B.

According to the first selecting method, the color sequence of the input SECAM system carrier chrominance signal of the first converter is the same as the color sequence of the output SECAM system carrier chrominance signal of the second converter. In other words, a first relationship between the color sequence (sequential order of the (R-Y) and (B-Y) color difference signals) of the input SECAM system carrier chrominance signal of the first converter and the polarity of the color difference signal (R-Y) within the output PAL system carrier chrominance signal of the first converter is the same as a second relationship between the polarity of the color difference signal (R-Y) within the input PAL system carrier chrominance signal of the second converter and the color sequence of the output SECAM system carrier chrominance signal of the second converter. On the other hand, the first and second relationships differ in the second selecting method.

In FIGS.1A and 1B, "after demodulation of SECAM with *" denotes the color difference signals (R-Y) and (B-Y) when they are demodulated in the SECAM system television receiver, such SECAM system carrier chrominance signal is generated in line-sequence within the second converter by the first selecting method. On the other hand, "after demodulation of SECAM without *" denotes the color difference signals (R-Y) and (B-Y) when they are demodulated in the SECAM system television receiver, such SECAM system carrier chrominance signal is generated in line-sequence within the second converter by the second selecting method.

In the case shown in FIG.1A where the PAL demodulator includes the 1H delay circuit, the smear to appear on the screen of the SECAM system television receiver supplied with the finally obtained SECAM system color video signal, is represented by portions surrounded by a broken line, when it is defined that the smear is caused by existence of the color difference signal (R-Y) in the line of the image which should originally be blue only and the lack of or insufficient color difference signal (B-Y).

Accordingly, in the case shown in FIG.1A, it can be seen that the number of lines with the smear under the column "after demodulation of SECAM without *" is lesser than that under the column "after demodulation of SECAM with *". Hence, in the present invention, in the case where the PAL demodulator has the 1H delay circuit, the second converter carries out the system conversion by determining the color sequence of the carrier chrominance signal which is other sequence than the sequence with which the first converter performs its system conversion.

On the other hand, in the case where the PAL demodulator does not have the 1H delay circuit, the color difference signals (R-Y) and (B-Y) demodulated by the PAL demodulator within the second converter become as shown under a column "simple PAL demodulator" in FIG.1B where the simple PAL demodulator refers to the PAL demodulator having no 1H delay circuit.

When the color difference signal with the symbol "*" is selected and the SECAM system carrier chrominance signal is generated in the second converter and reproduced on the television receiver which is in conformance to the SECAM standards, the two kinds of color difference signals (R-Y) and (B-Y) become as shown under the column "after demodulation of SECAM with *" in FIG.1B, and the smear appears in the lines surrounded by the broken line.

On the other hand, when the color difference signals without the symbol "*" is selected and the SECAM system carrier chrominance signal is generated in the second converter and reproduced on the television receiver which is in conformance to the SECAM standards, the two kinds of color difference signals (R-Y) and (B-Y) become as shown under the column "after demodulation of SECAM without *" in FIG.1B, and the smear appears in the lines surrounded by the broken line.

As the present invention utilizes "after demodulation of SECAM with *" when using the simple PAL demodulator having no 1H delay circuit. For this reason, the number of lines in which the smear appears is minimized as may be seen from FIG.1B.

Furthermore, in the case where the second converter has the 1H delay circuit and the luminance signal within the input PAL system color video signal thereto is delayed by 1H and multiplexed to the output SECAM system carrier chrominance signal of the second converter, then the two kinds of color difference signals are matched in timings in the SECAM system television receiver, the two color difference signals are equivalent to the case where a boundary between red and blue is delayed by 1H in FIG.1A. Thus, the number of lines in which the smear appears is reduced by one from the lines indicated by the broken line under the column "after demodulation of SECAM without *" in FIG.1A, thus it is possible to carry out the system conversion resulting a reproduced picture having an even higher picture quality.

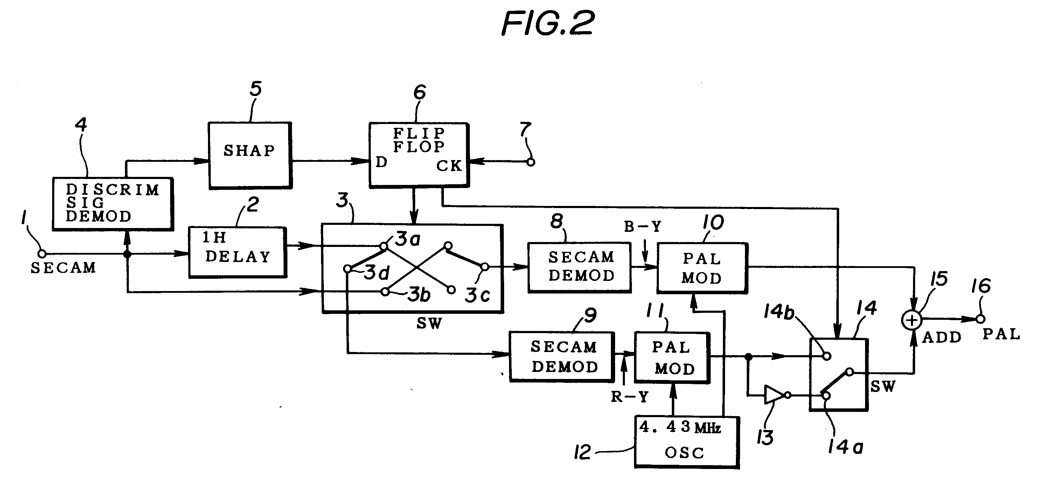

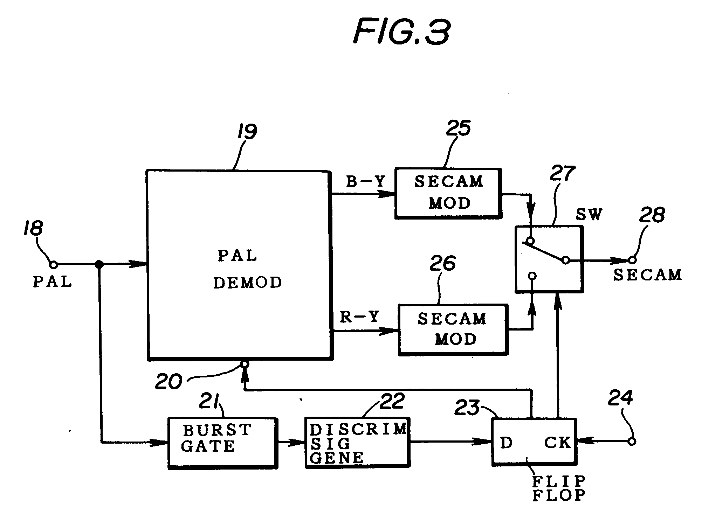

FIG.2 shows an embodiment of the first converter used in the present invention, and FIG.3 shows an embodiment of the second converter used in the present invention.

In FIG.2, the carrier chrominance signal of the input SECAM system color video signal applied to an input terminal 1 passes through a 1H delay circuit 2 and is supplied to a terminal 3a of a switching circuit 3. On the other hand, the input carrier chrominance signal is supplied directly to a terminal 3b of the switching circuit 3. At the same time, the input carrier chrominance signal is supplied to a discriminating signal demodulator 4 wherein a discriminating signal within the input carrier chrominance signal is demodulated. The discriminating signal is transmitted at every predetermined time.

The output discriminating signal from the discriminating signal demodulator 4 is supplied to a shaping circuit 5 and shaped into a square-wave having a high level in the lines in which the color difference signal (R-Y) of the input carrier chrominance signal is transmitted and a low level in the lines in which the color difference signal (B-Y) of the input carrier chrominance signal is transmitted. The polarity (or logic level) of the square wave is thus inverted at a rate of 1H. The square-wave from the shaping circuit 5 is applied to a data input terminal D of a delay flip-flop 6.

On the other hand, a horizontal synchronizing signal is separated from a luminance signal of the input SECAM system color video signal by a known means (not shown) and is applied to a clock input terminal CK of the flip-flop 6 through an input terminal 7. Accordingly, the flip-flop 6 outputs two square-waves each being bi-level corresponding to (R-Y) line and (B-Y) line of the input carrier chrominance signal. The two square-waves respectively supplied to the switching circuits 3 and 14, change respective levels at every 1H and the relative phase therebetween is constantly maintained to a predetermined phase relationship.

The switching circuit 3 receives one of the square-waves from the flip-flop 6 as a switching signal and selectively outputs the carrier chrominance signal from a common terminal 3c and selectively outputs the output carrier chrominance signal of the 1H delay circuit 2 from a common terminal 3d during a time of 1H in which the input carrier chrominance signal is a first frequency modulated wave (FM wave) modulated by the color difference signal (B-Y). The switching circuit 3 selectively outputs the output carrier chrominance signal of the 1H delay circuit 2 from the common terminal 3c and selectively outputs the input carrier chrominance signal from the common terminal 3d during a next time of 1H in which the input carrier chrominance signal is a second frequency modulated wave (FM wave) modulated by the color difference signal (R-Y). The connection of the switching circuit 3 is alternately switched at every 1H between the two states i.e. the terminals 3a and 3d being connected and the terminals 3b and 3c being connected is one and the terminals 3a and 3c being connected and the terminals 3b and 3d being connected is another.

Accordingly, two kinds of carrier chrominance signals which are FM waves having mutually different carrier frequencies are obtained with matched timing in parallel from the common terminals 3c and 3d of the switching circuit 3. The two kinds of carrier chrominance signals are independently supplied to SECAM demodulators 8 and 9 wherein the signals are frequency-demodulated. Hence, the color difference signal (B-Y) is obtained from the SECAM demodulator 8, and at the same time, the color difference signal (R-Y) is obtained from the SECAM demodulator 9. The color difference signals (B-Y) and (R-Y) having matched timing are independently supplied to PAL modulators 10 and 11 wherein the color difference signals (B-Y) and (R-Y) independently modulate two kinds of carriers from an oscillator 12. The two kinds of carriers have the same frequency of 4.43 MHz but have a phase difference of 90 degrees, and the PAL modulators 10 and 11 respectively modulate the two kinds of carriers by the color difference signals (B-Y) and (R-Y) in conformance with the carrier suppressed quadrature (two-phase) amplitude modulation.

An output modulated wave of the PAL modulator 11 is inverted in an inverter 13 and supplied to a terminal 14a of the switching circuit 14. On the other hand, the output modulated wave of the PAL modulator 11 is supplied directly to a terminal 14b of the switching circuit 14. The switching circuit 14 receives the square wave from the flip-flop 6 as a switching signal and alternately outputs the modulated waves supplied to the terminals 14a and 14b at every 1H.

Therefore, a second modulated wave in which the phase of the carrier is inverted for every 1H is obtained from the switching circuit 14 and supplied to an adding circuit 15. The adding circuit 15 adds the second modulated wave and a first modulated wave from the PAL modulator 10 and supplies a common frequency band multiplexed signal to an output terminal 16. The multiplexed signal from the output terminal 16 is a carrier chrominance signal in the PAL system. Then, a PAL system color burst signal which is generated by a known means (not shown) is multiplexed to predetermined portions of the carrier chrominance signal and supplied to a carrier chrominance signal recording section of the VTR, for example.

According to the present embodiment, the switching circuits 3 and 14 are controlled by the two kinds of square waves having a predetermined phase relationship. For this reason, the transmission sequence of the color difference signals within the input carrier chrominance signal applied to the input terminal 1, the phase of the carrier of the second modulated wave outputted from the switching circuit 14 and the phase of the color burst signal are controlled to maintain a predetermined relationship. In other words, the color sequence information of the input SECAM system carrier chrominance signal is transmitted by being referred to the polarity of the color difference signal (R-Y) (phase of the color burst signal) of the PAL system carrier chrominance signal to be outputted from the first converter.

In FIG.2, the time matching of the SECAM system carrier chrominance signal is performed before being demodulated into the color difference signals. However, it is of course possible to first obtain a line-sequential color difference signal by the demodulation in the SECAM demodulator and then carry out the time matching.

Next, a description will be given of another essential part of the present invention in which the PAL system carrier chrominance signal is converted into the SECAM system carrier chrominance signal, by referring to FIG.3. In FIG.3, an input terminal 18 receives the carrier chrominance signal of the PAL system color video signal which is outputted from the output terminal 16 shown in FIG.2 and obtained through a recording system and a reproducing system (both not shown) of the video tape recorder which respectively record the signal on and reproduce the signal from a magnetic tape (not shown). The PAL system carrier chrominance signal from the input terminal 18 is supplied to a PAL demodulator 19 wherein the signal is demodulated into the two kinds of color difference signals (R-Y) and (B-Y).

The PAL system carrier chrominance signal is also supplied to a burst gate circuit 21 wherein the color burst signal is separated and supplied to a discriminating signal generator 22. The discriminating signal generator 22 discriminates the phase of the color burst signal and generates a discriminating signal for discriminating the phase of the carrier of the second modulated wave mentioned before (that is, the polarity of the color difference signal (R-Y)). In the second modulated wave the phase of the carrier is inverted at an interval of 1H. The discriminating signal from the discriminating signal generator 22 is applied to a data input terminal D of a delay flip-flop 23. A horizontal synchronizing signal which is separated from the luminance signal of the input PAL system color video signal by a known means (not shown) is applied to a clock input terminal CK of the flip-flop 23 through a terminal 24. Hence, the flip-flop 23 outputs two square waves which are virtually the discriminating signal sampled by the horizontal synchronizing signal, and the phases of the square waves are inverted at every 1H.

Accordingly, the relative phase relationship of the two square waves is constantly maintained to a predetermined relationship. One square wave is applied to an input terminal 20 of the PAL demodulator 19 as a switching signal, and the other square wave is applied to a switching circuit 27 as a switching signal.

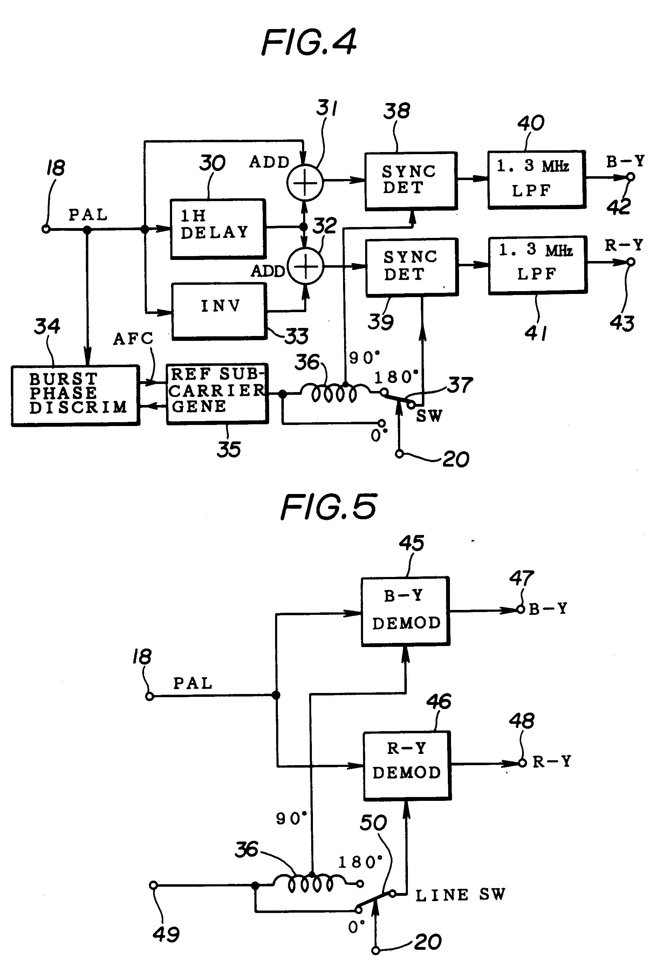

The PAL demodulator 19 may have a construction shown in FIG.4 having a 1H delay circuit or have a construction shown in FIG.5 having no 1H delay circuit. The present invention selects the input and output color sequences to a predetermined relationship depending on the construction of the PAL demodulator 19.

In the PAL demodulator shown in FIG.4, the input PAL system carrier chrominance signal is passed through a 1H delay circuit 30 and supplied to adding circuits 31 and 32. The input PAL system carrier chrominance signal is also supplied directly to the adding circuit 31. Further, the input PAL system carrier chrominance signal is supplied to the adding circuit 32 through a polarity inverting circuit 33. The first modulated wave of which the phase of the carrier is constant and the second modulated wave of which the phase of the carrier is inverted at an interval of 1H constitute the PAL system carrier chrominance signal, and between the two the first modulated wave is obtained from the adding circuit 31 while the second modulated wave is obtained from the adding circuit 32.

On the other hand, the PAL system carrier chrominance signal is supplied to a burst phase discriminating circuit 34 wherein the phase of the color burst signal is discriminated. Based on the discrimination made in the burst phase discriminating circuit 34, a reference subcarrier generating circuit 35 generates a reference subcarrier of 4.43 MHz which is synchronized with the phase of the color burst signal. The reference subcarrier is subjected to a phase shift of 90 degrees and 180 degrees in a phase shifter 36. The reference subcarrier subjected to the phase shift of 90 degrees is supplied to a synchronous detector 38. The reference subcarrier subjected to the phase shift of 180 degrees is supplied to a line switch 37 together with the reference subcarrier which is obtained directly from the reference subcarrier generating circuit 35. The switching signal applied to the terminal 20 alternately switches over the line switch 37 at a rate of 1H, and the reference subcarrier subjected to the phase shift of 180 degrees and the reference subcarrier not subjected to a phase shift are alternately supplied to a synchronous detector 39 at every 1H.

Accordingly, the first modulated wave from the adder 31 is subjected to a synchronous detection in the synchronous detector 38 and the color difference signal (B-Y) is obtained from the synchronous detector 38. The color difference signal (B-Y) is passed through a lowpass filter 40 having a cutoff frequency of 1.3 MHz so as to eliminate an unwanted high-frequency component and is outputted from an output terminal 42. On the other hand, the phase of the second modulated wave from the adder 32 is inverted at an interval of 1H, but the phase of the reference subcarrier from the line switch 37 is also inverted at the interval.

Hence, the color difference signal (R-Y) which is cancelled of the phase inversion is obtained from the synchronous detector 39. The color difference signal (R-Y) is passed through a lowpass filter 41 having a cutoff frequency of 1.3 MHz so as to eliminate an unwanted high-frequency component and is outputted from an output terminal 43.

Next, a description will be given of the PAL demodulator having no 1H delay circuit, by referring to FIG.5. In FIG.5, those parts which are the same as those corresponding parts in FIG.4 are designated by the same reference numerals, and a description thereof will be omitted. In FIG.5, the input PAL system carrier chrominance signal is supplied to a B-Y demodulator 45 and an R-Y demodulator 46.

On the other hand, the reference subcarrier of 4.43 MHz generated similarly as in the case of the PAL demodulator shown in FIG.4 is applied to an input terminal 49 and supplied to the phase shifter 36. The reference subcarrier subjected to 90 degree phase shift by the phase shifter 36 is supplied to a B-Y demodulator 45. The B-Y demodulator 45 demodulates the first modulated wave of the input PAL system carrier chrominance signal and supplies the color difference signal (B-Y) to an output terminal 47. An output of the phase shifter 36 is subjected to 180 degree phase shift and the reference subcarrier of 4.43 MHz supplied to the input terminal 49, are respectively supplied to two stationary contacts of a line switch 50, and are alternately supplied to the R-Y demodulator 46. The R-Y demodulator 46 demodulates the second modulated wave of the input PAL system carrier chrominance signal and supplies the color difference signal (R-Y) to an output terminal 48.

Returning now to the description of FIG.3, between the color difference signals (B-Y) and (R-Y) obtained through the demodulation carried out in the PAL demodulator 19, the color difference signal (B-Y) is supplied to a SECAM modulator 25 wherein a carrier of 4.25 is frequency-modulated to a first FM wave. At the same time, the color difference signal (R-Y) is supplied to a SECAM modulator 26 wherein a carrier of 4.41 MHz is frequency-modulated to a second FM wave.

A switching circuit 27 is controlled by the square wave from the flip-flop 23 and alternately supplied to an output terminal 28 combining the first and second FM waves at a rate of 1H. As a result, a carrier chrominance signal in conformance to the SECAM standards is obtained from the output terminal 28.

The switching phase of the switching circuit 27 and the switching phase of the line switches 37 and 50 are maintained to a predetermined phase relationship. Moreover, the switching phases of the switching circuits 3 and 14 described before are also set to a predetermined phase relationship. When the PAL demodulator 19 has the 1H delay circuit 30 as shown in FIG.4, the color sequence of the input SECAM system carrier chrominance signal applied to the input terminal 1 and the color sequence of the SECAM system carrier chrominance signal outputted from the output terminal 28 are fixed to be mutually opposite with respect to the same line. On the other hand, when the PAL demodulator 19 has no 1H delay circuit as shown in FIG.5, the above two input and output color sequences are fixed to be the same with respect to the same line.

When the PAL demodulator 19 has the 1H delay circuit 30 as shown in FIG.4, the reproduced luminance signal which is separated from the input reproduced PAL system color video signal and demodulated is passed through a 1H delay circuit (not shown) before being multiplexed to the SECAM system carrier chrominance signal from the output terminal 28 in order to form the final output SECAM system color video signal. Hence, the reproduced picture obtained in this case has the minimum smear as described before.

The present invention is especially suited for application to the VTR employing the phase shift method. However, the application of the present invention is not limited to such and the present invention is also applicable to a recording medium such as a disc and other transmission paths.

Accordingly, the present invention fixes the relationship of the color sequence of the input SECAM system carrier chrominance signal and the color sequence of the SECAM system carrier chrominance signal which is outputted after the input SECAM system carrier chrominance signal is converted into the PAL system carrier chrominance signal for recording and reproduction and then converted back into the SECAM system carrier chrominance signal to a predetermined relationship depending on the construction of the PAL demodulator, that is, depending on whether or not the PAL demodulator has a 1H delay circuit. Hence, it is possible to obtain a reproduced picture having a minimum smear.

## Claims

1. A color video signal converting apparatus comprising a first system converting circuit (2-6, 8-15) for converting a carrier chrominance signal of an input SECAM system color video signal into a PAL system carrier chrominance signal wherein a phase of a color difference signal (R-Y) of the PAL carrier chrominance signal is related to a first sequential order of the two color difference signals (R-Y) and (B-Y) of the input SECAM system color video signal, and a second system converting circuit (19, 21-23, 25-27) supplied with the PAL system carrier chrominance signal from said first system converting circuit through a transmission path for converting the PAL system carrier chrominance signal back into a SECAM system carrier chrominance signal by subjecting thereof to demodulation and modulation processes, in which, the PAL system carrier chrominance signal is demodulated by a PAL demodulator (19) including a delay circuit (30) having a delay time of one horizontal scanning period providing color difference signals (R-Y) and (B-Y) as outputs, said second system converting circuit detecting the sequential order from a phase of a color burst signal of the PAL system carrier chrominance signal and outputting the SECAM system carrier chrominance signal in which a second sequential order of the two color difference signals of the output SECAM system carrier chrominance signal is fixed responsive to the detected sequential order, characterised in that said second system converting circuit (19, 21-23, 25-27) carries out a conversion by determining the second sequential order reversed to said first sequential order with respect to a relationship between the phase of the color difference signal (R-Y) of the input PAL system carrier chrominance signal and the color difference signals of the output SECAM system carrier chrominance signal.

2. A color video signal converting apparatus comprising a first system converting circuit (2-6, 8-15) for converting a carrier chrominance signal of an input SECAM system color video signal into a PAL system carrier chrominance signal wherein a phase of a color difference signal (R-Y) of the PAL carrier chrominance signal is related to a first sequential order of the two color difference signals (R-Y) and (B-Y) of the input SECAM system color video signal, and a second system converting circuit (19, 21-23, 25-27) supplied with the PAL system carrier chrominance signal from said first system converting circuit through a transmission path for converting the PAL system carrier chrominance signal back into a SECAM system carrier chrominance signal by subjecting thereof to demodulation and modulation processes, in which, the PAL system carrier chrominance signal is demodulated by a PAL demodulator (19) providing color difference signals (R-Y) and (B-Y) as outputs, said second system converting circuit detecting the sequential order from a phase of a color burst signal of the PAL system carrier chrominance signal and outputting the SECAM system carrier chrominance signal in which a second sequential order of the two color difference signals of the output SECAM system carrier chrominance signal is fixed responsive to the detected sequential order, characterised in that said second system converting circuit (19, 21-23, 25-27) carries out a conversion by determining the second sequential order the same as said first sequential order with respect to a relationship between the phase of the color difference signal (R-Y) of the input PAL system carrier chrominance signal and the color difference signals of the output SECAM system carrier chrominance signal, and said PAL demodulator including no delay circuit having a delay time of an integral number of one horizontal scanning period.

3. A color video signal converting apparatus as claimed in Claim 2, characterised in that said second system converting circuit (19, 21-23, 25-27) includes a circuit (23, 27, 50) for fixing the second sequential order the same as said first sequential order.

4. A color video signal converting apparatus as claimed in any one of the preceding claims, characterised in that said transmission path uses a magnetic recording medium.

5. A color video signal converting apparatus as claimed in any one of the preceding claims, characterised in that said color video signal converting apparatus is a part of a helical scan type video tape recorder employing a low-band conversion system in which a color video signal is separated into a luminance signal and a carrier chrominance signal, the separated luminance signal is frequency-modulated into a frequency modulated luminance signal, the separated carrier chrominance signal is frequency-converted into a frequency converted carrier chrominance signal occupying a frequency band lower than a frequency band occupied by the frequency modulated luminance signal, the frequency modulated luminance signal and the frequency converted carrier chrominance signal are frequency-division-multiplexed into a frequency division multiplexed signal, and the frequency division multiplexed signal is recorded on and/or reproduced from tracks formed obliquely to a longitudinal direction of a magnetic tape.

## Patentansprüche

1. Farbvideosignalumsetzungsgerät, aufweisend eine Umsetzungsschaltung für ein erstes System (2 bis 6, 8 bis 15) zum Umsetzen eines Farbträgersignals eines SECAM-System-Farbvideoeingangssignals in ein PAL-System-Farbträgersignal, wobei eine Phase eines Farbdifferenzsignals (R-Y) des PAL-System-Farbträgersignals auf eine erste sequentielle Folge der beiden Farbdifferenzsignale (R-Y) und (B-Y) des SECAM-System-Farbvideoeingangssignals bezogen ist, und eine Umsetzungsschaltung (19, 21 bis 23, 25 bis 27) für ein zweites System, welcher Schaltung das PAL-System-Farbträgersignal von der Umsetzungsschaltung für ein erstes System über einen Übertragungspfad zur Rückumsetzung des PAL-System-Farbträgersignals in ein SECAM-System-Farbträgersignal zugeführt wird, indem das Farbträgersignal Demodulations- und Modulationsvorgängen unterworfen wird, in denen das PAL-System-Farbträgersignal mit einem PAL-Demodulator (19) demoduliert wird, der eine Verzögerungsschaltung (30) enthält, die eine Verzögerungszeit von einer Horizontalabtastperiode aufweist, woraus Farbdifferenzsignale (R-Y) und (B-Y) als Ausgangssignale resultieren, wobei die Umsetzungsschaltung für ein zweites System die sequentielle Folge aus einer Phase eines Farbburstsignals des PAL-System-Farbträgersignals erfaßt und das SECAM-System-Farbträgersignal ausgibt, in welchem eine zweite sequentielle Folge der beiden Farbdifferenzsignale des ausgegebenen SECAM-System-Farbträgersignals in Abhängigkeit von der erfaßten sequentiellen Folge festgelegt ist,
**dadurch gekennzeichnet,**
daß die Umsetzungsschaltung (19, 21 bis 23, 25 bis 27) für ein zweites System eine Umsetzung ausführt, indem sie die zweite sequentielle Folge umgekehrt zur ersten sequentiellen Folge bezüglich einer Beziehung zwischen der Phase des Farbdifferenzsignals (R-Y) des PAL-System-Farbträgerein-gangssignals und der Farbdifferenzsignale des SECAM-System-Farbträgerausgangssignals bestimmt.

2. Farbvideosignalumsetzungsgerät, aufweisend eine Umsetzungsschaltung (2 bis 6, 8 bis 15) für ein erstes System zum Umsetzen eines Farbträgersignals eines SECAM-System-Farbvideoeingangssignals in ein PAL-System Farbträgersignal, wobei eine Phase eines Farbdifferenzsignals (R-Y) des PAL-System-Farbträgersignals auf eine erste sequentielle Folge der beiden Farbdifferenzsignale (R-Y) und (B-Y) des SECAM-System-Farb-videoeingangssignals bezogen ist, und eine Umsetzungsschaltung (19,21-23, 25-27) für ein zweites System, der das PAL-System-Farbträgersignal von der Umsetzungsschaltung für ein erstes System über einen Übertragungspfad zur Rückumsetzung des PAL-System-Farbträgersignals in ein SECAM-System-Farbträgersignal Zugeführt wird, indem das Farbträgersignal Demodulations- und Modulationsvorgängen unterworfen wird, in denen das PAL-System-Farbträgersignal mit einem PAL-Demodulator (19) demoduliert wird, woraus Farbdifferenzsignale (R-Y) und (B-Y) als Ausgangssignale resultieren, wobei die Umsetzungsschaltung für ein zweites System die sequentielle Folge aus einer Phase eines Farbburstsignals des PAL-System-Farbträgersignals erfaßt und das SECAM-System-Farbträgersignal ausgibt, in welchem eine zweite sequentielle Folge der beiden Farbdifferenzsignale des ausgegebenen SECAM-System-Farbträgersignals in Abhängigkeit von der erfaßten sequentiellen Folge festgelegt ist,
**dadurch gekennzeichnet,**
daß die Umsetzungsschaltung (19, 21 bis 23, 25 bis 27) für ein zweites System eine Umsetzung ausführt, indem sie die zweite sequentielle Folge als dieselbe wie die erste sequentielle Folge bezüglich einer Beziehung zwischen der Phase des Farbdifferenzsignals (R-Y) des PAL-System-Farbträgereingangssignals und der Farbdifferenzsignale des SECAM-System-Farbträgerausgangssignals bestimmt, und der PAL-Demodulator keine Verzögerungsschaltung enthält, die eine Verzögerungszeit von einem ganzzahligen Vielfachen einer Horizontalabtastperiode aufweist.

3. Farbvideosignalumsetzungsgerät nach Anspruch 2,
**dadurch gekennzeichnet,**
daß die Umsetzungsschaltung (19, 21 bis 23, 25 bis 27) für ein zweites System eine Schaltung (23, 27, 50) zur Festlegung der zweiten sequentiellen Folge als dieselbe wie die erste sequentielle Folge aufweist.

4. Farbvideosignalumsetzungsgerät nach einem der vorhergehenden Ansprüche,
**dadurch gekennzeichnet,**
daß der Übertragungspfad ein magnetisches Aufzeichnungsmedium verwendet.

5. Farbvideosignalumsetzungsgerät nach einem der vorhergehenden Ansprüche,
**dadurch gekennzeichnet,**
daß das Farbvideosignalumsetzungsgerät Teil eines Schrägspurvideobandrecorders ist, der ein Niedrigbandumsetzungssystem verwendet, in welchem ein Farbvideosignal in ein Leuchtdichtesignal und ein Farbträgersignal getrennt wird, das abgetrennte Leuchtdichtesignal durch Frequenzmodulation in ein frequenzmoduliertes Leuchtdichtesignal umgesetzt wird, das abgetrennte Farbträgersignal in der Frequenz in ein frequenzumgesetztes Farbträgersignal umgesetzt wird, welches ein tieferes Frequenzband als ein vom frequenzmodulierten Leuchtdichtesignal besetztes Frequenzband belegt, in welchem ferner das frequenzmodulierte Leuchtdichtesignal und das in der Frequenz umgesetzte Farbträgersignal in ein Frequenzmultiplexsignal frequenzmultiplext werden und das Frequenzmultiplexsignal auf schräg zur Längsrichtung eines Magnetbandes ausgebildeten Spuren aufgezeichnet wird und/oder von diesen Spuren wiedergegeben wird.

## Revendications

1. Appareillage de conversion de signaux vidéo couleur comprenant un premier circuit convertisseur de procédé (2 à 6, 8 à 15) pour convertir un signal de chrominance à porteuse d'un signal vidéo couleur d'entrée du procédé SECAM en un signal de chrominance à porteuse du procédé PAL dans lequel une phase d'un signal de différence de couleur (R-Y) du signal de chrominance à porteuse PAL est liée à un premier ordre séquentiel des deux signaux de différence de couleur (R-Y) et (B-Y) du signal vidéo couleur d'entrée du procédé SECAM, et un deuxième circuit convertisseur de procédé (19, 21 à 23, 25 à 27) auquel est fourni le signal de chrominance à porteuse du procédé PAL issu dudit premier circuit convertisseur de procédé, par l'intermédiaire d'un chemin de transmission, pour reconvertir le signal de chrominance à porteuse du procédé PAL en signal de chrominance à porteuse du procédé SECAM en soumettant le signal à des processus de démodulation et modulation dans lesquels le signal de chrominance à porteuse du procédé PAL est démodulé par un démodulateur PAL (19) comportant un circuit à retard (30) ayant un temps de retard d'une période de balayage horizontal et fournissant les signaux de différence de couleur (R-Y) et (B-Y) comme signaux de sortie, ledit deuxième circuit de conversion de procédé détectant l'ordre séquentiel à partir d'une phase d'un signal de salve couleur du signal de chrominance à porteuse du procédé PAL et fournissant le signal de chrominance à porteuse du procédé SECAM dans lequel un deuxième ordre séquentiel des deux signaux de différence de couleur du signal de chrominance à porteuse de sortie du procédé SECAM est fixé en étant sensible à l'ordre séquentiel détecté, caractérisé en ce que ledit deuxième circuit convertisseur de procédé (19, 21 à 23, 25 à 27) effectue une conversion en déterminant le deuxième ordre séquentiel inversé par rapport audit premier ordre séquentiel selon une relation entre la phase du signal de différence de couleur (R-Y) du signal de chrominance à porteuse d'entrée du procédé PAL et les signaux de différence de couleur du signal de chrominance à porteuse de sortie du procédé SECAM.

2. Appareillage de conversion de signaux vidéo couleur comprenant un premier circuit convertisseur de procédé (2 à 6, 8 à 15) pour convertir un signal de chrominance à porteuse d'un signal vidéo couleur d'entrée du procédé SECAM en un signal de chrominance à porteuse du procédé PAL, dans lequel une phase d'un signal de différence de couleur (R-Y) du signal de chrominance à porteuse PAL est liée à un premier ordre séquentiel des deux signaux de différence de couleur (R-Y) et (B-Y) du signal vidéo couleur d'entrée du procédé SECAM, et un deuxième circuit convertisseur de procédé (19, 21 à 23, 25 à 27) auquel est fourni le signal de chrominance à porteuse du procédé PAL issu dudit premier circuit convertisseur de procédé, par l'intermédiaire d'un chemin de transmission, pour reconvertir le signal de chrominance à porteuse du procédé PAL en signal de chrominance à porteuse du procédé SECAM en soumettant le signal à des processus de démodulation et modulation dans lesquels le signal de chrominance à porteuse du procédé PAL est démodulé par un démodulateur PAL (19) fournissant des signaux de différence de couleur (R-Y) et (B-Y) comme signaux de sortie, ledit deuxième circuit convertisseur de procédé détectant l'ordre séquentiel à partir d'une phase d'un signal de salve couleur du signal de chrominance à porteuse du procédé PAL et fournissant le signal de chrominance à porteuse du procédé SECAM dans lequel un deuxième ordre séquentiel des deux signaux de différence de couleur du signal de chrominance à porteuse de sortie du procédé SECAM est fixé en étant sensible à l'ordre séquentiel détecté, caractérisé en ce que ledit deuxième circuit convertisseur de procédé (19, 21 à 23, 25 à 27) effectue une conversion en déterminant le deuxième ordre séquentiel pour être le même que ledit premier ordre séquentiel selon une relation entre la phase du signal de différence de couleur (R-Y) du signal de chrominance à porteuse d'entrée du procédé PAL et les signaux de différence de couleur du signal de chrominance à porteuse de sortie du procédé SECAM, et ledit démodulateur PAL ne comportant pas de circuit à retard ayant un temps de retard égal à un nombre entier de périodes de balayage horizontal.

3. Appareillage de conversion de signaux vidéo couleur selon la revendication 2, caractérisé en ce que ledit deuxième circuit convertisseur de procédé (19, 21 à 23, 25 à 27) comporte un circuit (23, 27, 50) pour fixer le deuxième ordre séquentiel pour être le même que ledit premier ordre séquentiel.

4. Appareillage de conversion de signaux vidéo couleur selon l'une des revendication précédentes, caractérisé en ce que ledit chemin de transmission utilise un support d'enregistrement magnétique.

5. Appareillage de conversion de signaux vidéo couleur selon l'une des revendications précédentes, caractérisé en ce que ledit appareillage de conversion de signaux vidéo couleur fait partie d'un magnétoscope à balayage hélicoïdal employant un procédé de conversion en bande inférieure, dans lequel un signal vidéo couleur est décomposé en un signal de luminance et un signal de chrominance à porteuse, le signal de luminance séparé est modulé en fréquence pour obtenir un signal de luminance à modulation de fréquence, le signal de chrominance à porteuse séparé est soumis à un changement de fréquence pour obtenir un signal de chrominance à porteuse à fréquence changée occupant une bande de fréquences inférieure à la bande de fréquences occupée par le signal de luminance à modulation de fréquence, le signal de luminance à modulation de fréquence et le signal de chrominance à fréquence changée sont multiplexés par répartition de fréquence pour former un signal multiplexé à répartition de fréquence, et ce signal multiplexé à répartition de fréquence est enregistré sur des pistes formées obliquement par rapport à la direction longitudinale d'une bande magnétique et/ou reproduit à partir de ces pistes.
